# EUROPÄISCHE PATENTSCHRIFT

(11) **EP 0 854 004 B1**
(45) Veröffentlichungstag und Bekanntmachung des Hinweises auf die Patenterteilung: **04.10.2001**
(21) Anmeldenummer: 98103286.5
(22) Anmeldetag: 09.04.1996
(51) Int. Cl.: B23K 26/00

(54) **Verfahren zum Herstellen von Dichtflächen an komplementären Formwerkzeugen**
Process for manufacturing sealing faces on complementary form tools
Procédé de réalisation de surfaces d'étanchéité pour des outils de formage complémentaires

(30) Priorität: 06.04.1995 DE 29505985 U
(43) Veröffentlichungstag der Anmeldung: 22.07.1998
(62) Teilanmeldung aus: 96909025.7
(73) Patentinhaber: LFC Laser Finishing Center AG, 91074 Herzogenaurach (DE)
(72) Erfinder: Bestenlehrer, Alexander, 91066 Herzogenaurach (DE)
(74) Vertreter: Winter, Brandl, Fürniss, Hübner, Röss, Kaiser, Polte Partnerschaft

(56) Entgegenhaltungen:
- US-A- 4 986 664

## Beschreibung

Die vorliegende Erfindung betrifft ein Verfahren und eine Vorrichtung zum Bearbeiten, insbesondere zum Polieren und Strukturieren von beliebigen 3D-Formflächen bzw. Freiformflächen mittels eines Laser und die Anwendung dieses Verfahrens zur Herstellung von komplementären Dichtflächen an komplementären Formwerkzeugen.

Aus der DE-OS 42 41 527 ist es bekannt, Laserstrahlen, insbesondere gepulste Excimer-Laser zum Glätten von Metalloberflächen zu verwenden. Durch die gepulste Beaufschlagung mit Energiedichten im Bereich von 5 x 10⁷ Watt/cm² wird die Oberfläche des Metalls aufgeschmolzen. Durch die Verwendung eines UV- bzw. Excimer-Lasers geschieht dies nur in den obersten Randbereichen des Metalls bis zu einer Tiefe von 1 bis 2 µm, so daß keinerlei Verformungen oder Risse entstehen und die Metalloberfläche geglättet wird.

Aus der DE-OS-42 17 530, der DE-OS-39 22 377, der EP-A-0 419 999 und der US-A-4,825,035 sind Verfahren und Vorrichtungen zum Härten von hochbeanspruchten metallischen Oberflächen, wie z. B. Kolbenlaufflächen, bekannt.

Aus der DE-OS 41 33 620 ist es bekannt, metallische Oberflächen mittels Laserstrahl zu strukturieren. Hierbei durchläuft der Laserstrahl Bahnkurven auf der Metalloberfläche, deren Form der gewünschten Strukturierung entspricht.

Aus der DE-OS 44 01 597 ist eine Laserbearbeitungs- bzw. Laserschneidvorrichtung bekannt, bei der die zu erzeugende Schnittform in Form von CAD-Daten eingegeben werden kann.

Aus der DE-OS 41 06 008 ist ein automatischer Schweißroboter bekannt, bei dem die Qualität der Schweißnähte online über optische Überwachung der Schweißnähte bzw. der Schweißspritzer überwacht wird.

Aus der DE-OS-37 11 470 ist ein Verfahren zum Herstellen eins dreidimensionalen Modells bekannt, das aus einer Vielzahl von Scheiben zusammengesetzt ist, die die Modellkonturen aufweisen und aus Plattenwerkstoff durch materialabtragende Bearbeitung mittels Laser hergestellt werden. Hierbei wird an einer bestimmten Stelle solange Material abgetragen, bis der SOLL-Wert erreicht ist.

Aus der DE-OS-42 19 809 ist ein Verfahren und eine Vorrichtung zum kontrollierten Abtragen von Schichten von einer Oberfläche mittels Laser bekannt. Um die Steuerung bzw. Regelung der Abtragung zu vereinfachen wird gewährleistet, daß aufeinanderfolgend bearbeitete Teilflächen immer eine konstante Fläche aufweisen.

Die aus dem Stand der Technik bekannten Strahl- bzw. Laserbearbeitungsverfahren und -vorrichtungen weisen den Nachteil auf, daß im wesentlichen nur im voraus bekannte Formen damit bearbeitet werden können. Ein großtechnischer Einsatz und das Bearbeiten von beliebigen, kompliziert geformten 3D-Formflächen ist damit jedoch nicht möglich.

Aus der US-A-4,986,664 ist ein Verfahren und eine Vorrichtung zum kontrollierten Materialabtrag. Hierbei wird die zu bearbeitende Oberfläche unmittelbar vor der Bearbeitung vermessen und auf der Basis dieser Meßdaten werden geeignete Bearbeitungsparameter gewählt.

Aus der JP-A-63101092 ist eine Vorrichtung zum Bearbeiten von 3D-Formflächen bekannt, bei der die zu bearbeitenden Fläche unmittelbar vor der Bearbeitung vermessen wird. Anhand der Meßdaten und der gewünschten Form werden geeignete Bearbeitungsparameter errechnet und in eine entsprechende Materialbearbeitung umgesetzt.

Es ist Aufgabe der Erfindung ein Verfahren zum Herstellen von komplementären Dichtflächen and komplementären Formwerkzeugen bereitzustellen.

Die Lösung dieser Aufgabe erfolgt durch die Merkmale des Anspruchs 1 bzw. 2.

Mit dem erfindungsgemäßen Verfahren lassen sich auf einfache Weise beliebig geformte, komplementäre Dichtflächen an komplementären Formwerkzeugen herstellen. Durch die hohe Genauigkeit des erfindungsgemäßen Verfahrens wird erreicht, daß die aufeinander zu liegen kommenden komplementären Dichtflächen sehr gut zueinander passen und damit sehr gut abdichten.

Bei einer ersten Variante wird zunächst von den komplementären Teildichtflächenpaaren nur eine Hälfte bearbeitet und die nach der Bearbeitung ermittelte aktualisierte IST-Form wird als SOLL-Form für die zweite Hälfte der Teildichtflächenpaare verwendet. Dadurch werden Fehler bzw. Abweichungen der ersten Hälfte der Teildichtflächenpaare von der SOLL-Form bei der Bearbeitung der zweiten Hälfte der Teildichtflächenpaare ausgeglichen bzw. neutralisiert.

Bei einer zweiten Variante erfolgt die Bearbeitung der komplementären Teildichtflächen auf einen konstanten Abstand zwischen den komplementären Teildichtflächen hin. Damit lassen sich mit nur einem Satz von SOLL-Daten zwei benachbarte, komplementäre Dichtflächen bearbeiten bzw. herstellen.

Trägt man den durch einen Laserstrahl verursachten Materialabtrag als Funktion der Laserfluenz auf der zu bearbeitenden Fläche auf, so ergibt sich bei Konstanthaltung anderer Bearbeitungsparameter eine Kurve, die im Bereich niedriger Laserfluenz flach ansteigt, im Bereich mittlerer Laserfluenz stark ansteigt und im Bereich hoher Laserfluenz wieder flacher ansteigt. Gemäß einer bevorzugten Ausführungsform der Erfindung wird der Laser in den Bereichen mit flachem Anstieg betrieben, da sich dort geringfügige Fluenzschwankungen kaum auf den Materialabtrag auswirken, so daß sich glatte, gleichmäßige Oberflächen ergeben.

Beim Laserpolieren von Werkstücken wird vorzugsweise der flache Bereich der Kurve bei niedriger Laserfluenz genutzt, da beim Laserpolieren kein Abtrag erwünscht ist.

Die übrigen Unteransprüche beziehen sich auf weitere vorteilhafte Ausgestaltungen der Erfindung.

Die vorliegende Anmeldung ist eine Teilanmeldung zu EP 96909025.7 (Stammanmeldung). Die in der Stammanmeldung beschrieben Vorrichtung zum Laserpolieren eignet sich besonders für die Durchführung des erfindungsgemäßen Verfahrens.

Weitere Merkmale, Einzelheiten und Vorteile der Erfindung ergeben sich aus der nachfolgenden Beschreibung einer beispielhaften Ausführungsform anhand der Zeichnung. Es zeigt:
- Fig. 1: eine schematische Darstellung einer beispielhaften Vorrichtung zur Ausführung des erfindungsgemäßen Verfahrens,

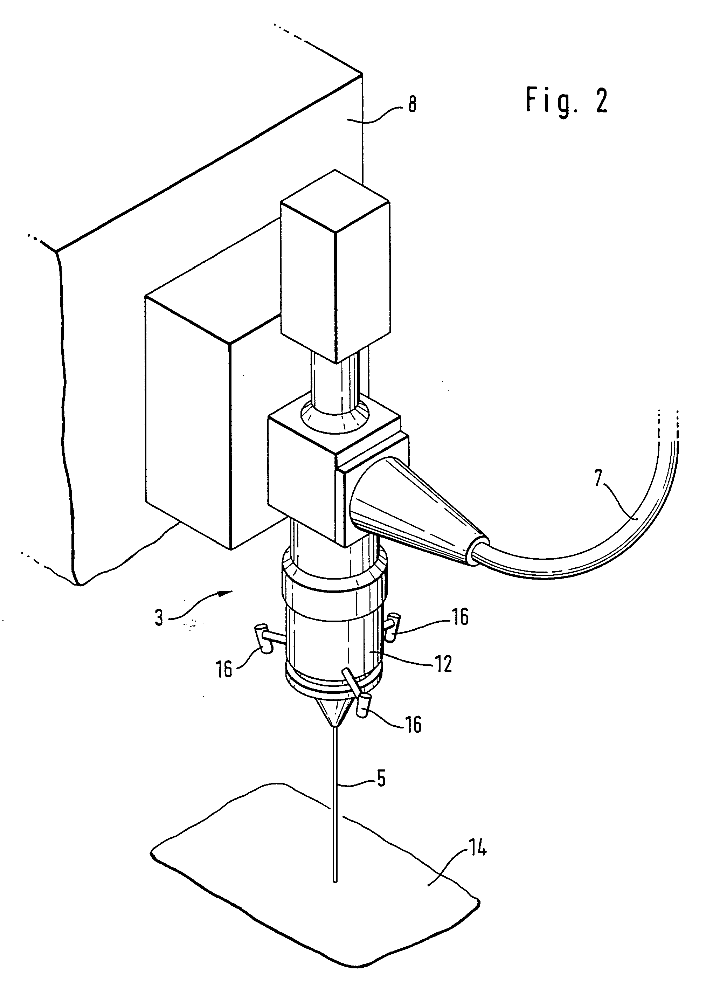

- Fig. 2: ein Detail der Vorrichtung nach Fig. 1,
- Fig. 3: eine schematische Darstellung zur Erläuterung der Arbeitsweise der Vorrichtung nach Fig. 1 und 2,
- Fig. 4: ein Flußdiagramm zur Veranschaulichung wesentlicher Teilschritte des erfinderischen Verfahrens,
- Fig. 5: eine schematische Darstellung eines Formwerkzeuges mit zwei komplementären Teilen,
- Fig. 6: ein Flußdiagramm zur Erläuterung einer ersten Ausführungsform des Verfahrens zur Herstellung von Dichtflächen gemäß der vorliegenden Erfindung,
- Fig. 7: eine schematische Darstellung zur Erläuterung einer zweiten Ausführungsform des Verfahrens zur Herstellung von Dichtflächen,
- Fig. 8: eine qualitative Darstellung des Materialabtrags als Funktion der Laserfluenz, und
- Fig. 9a und 9b: Abbildungsoptiken mit großer und kleiner Rayleighlänge.

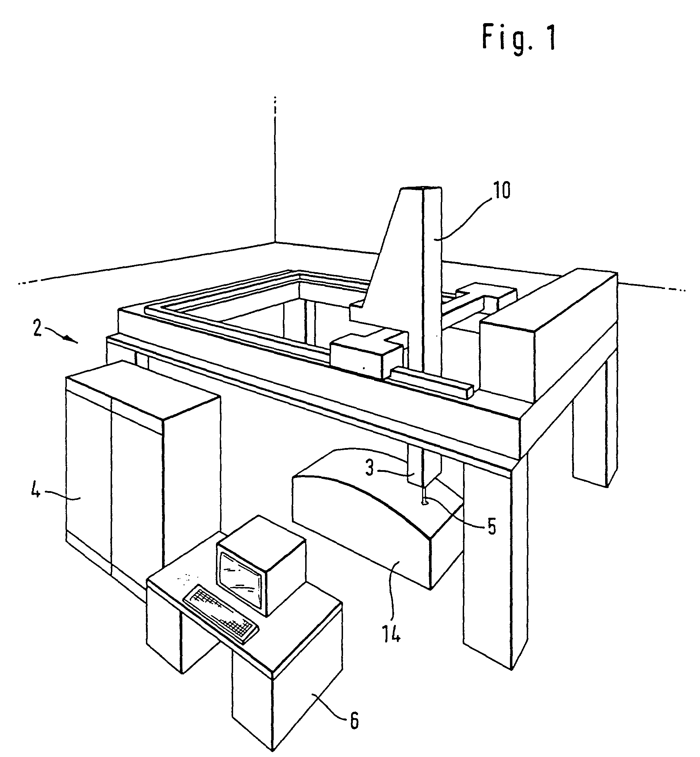

Die in Fig. 1 gezeigte beispielhafte Vorrichtung zur Durchführung der vorliegenden Erfindung umfaßt eine Lasereinrichtung 2 bestehend aus einem Laserkopf 3 und einer Laserstrahlerzeugungseinrichtung 4 mit zugehöriger Steuereinrichtung 6, durch die sich Bearbeitungsparameter, wie z. B. Pulsfrequenz, Pulsdauer, Fokkussierungsgrad, Vorschub, etc. des Arbeits- bzw. Laserstrahls 5 einstellen und steuern bzw. regeln lassen. Die Laserstrahlerzeugungseinrichtung 4 ist über ein Lichtleitkabel 7 mit dem Laserkopf 3 verbunden. Der Laserkopf 3 ist an einer Laserkopfhalterung 8 befestigt, die Teil einer XYZ-Positioniereinrichtung 10 ist. Der Laserkopf 3 umfaßt auch eine Abbildungsoptik bzw. Fokussiereinrichtung 12, durch die der aus dem Laserkopf 3 austretende Laserstrahl 5 auf der zu bearbeitenden Oberfläche eines Werkstücks 14 fokussiert wird. Auf diese Weise läßt sich der Laserkopf 3 und damit der aus dem Laserkopf 3 austretende Laserstrahl 5 in allen drei Raumrichtungen X, Y und Z bewegen und positionieren.

Mit dem Laserkopf 3 verbunden sind auch Meßsensoren 16, mittels denen sich die die Kontur der Oberfläche des zu bearbeitenden Werkstücks 14, beispielsweise durch Triangulation, unmittelbar vor dem Überstreichen des Laserstrahls 5 und unmittelbar nach dem Überstreichen des Laserstrahls 5 ermitteln läßt. Auf diese Weise wird unmittelbar während der Bearbeitung das Ergebnis der Bearbeitung mit dem Laserstrahl 5 überprüft und die Anzahl des Überstreichens der 3D-Formfläche mit dem Laserstrahl 5 kann entsprechend dem gewünschten Arbeitsergebnis optimiert werden.

Die Steuerung der gesamten Anlage erfolgt durch die Steuereinrichtung 6, durch die sowohl die Lasereinrichtung 2, bestehend aus Laserkopf 3 und Laserstrahlerzeugungseinrichtung 4, als auch die Positioniereinrichtung 10 und Meßsensoren 16 gesteuert und geregelt werden. Die Steuereinrichtung 6 bildet zusammen mit den Meßsensoren 16 eine 2D- bzw. 3D-Konturmeßeinrichtung 18. Bei der Steuereinrichtung 6 handelt es sich beispielsweise um einen Mikrocomputer mit einer Massenspeichereinrichtung. In diese Speichereinrichtung können beispielsweise CNC-Daten des zu bearbeitenden Werkstücks 14 eingespeichert werden. Mit der Konturmeßeinrichtung 18 kann damit die Soll-Ist-Abweichung erfaßt werden und die Anzahl der Bearbeitungsschritte und ebenso die Laserstrahlcharakteristiken entsprechend eingestellt werden.

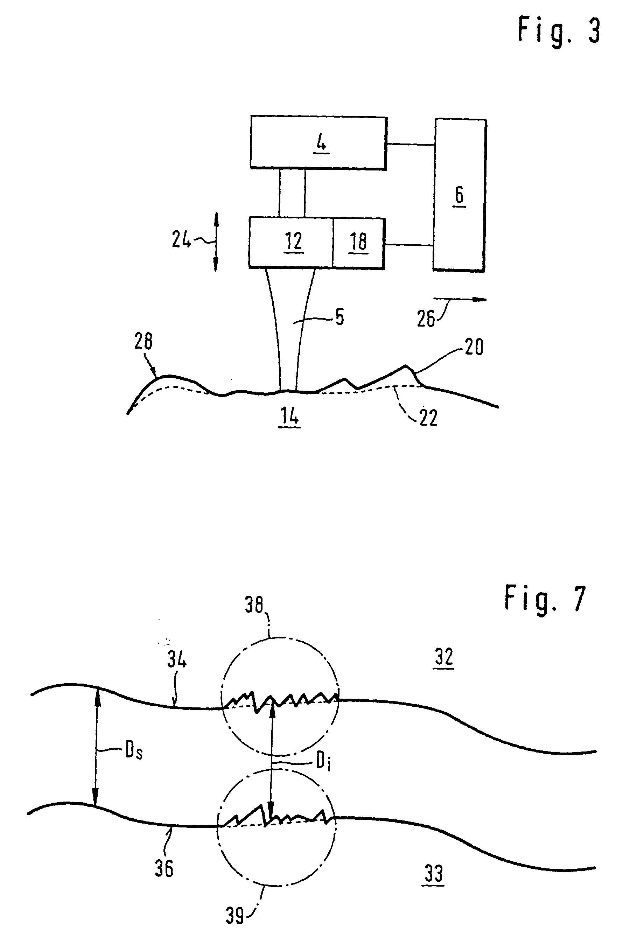

Fig. 3 zeigt eine schematische Darstellung der in Fig. 1 dargestellten Vorrichtung mit der Laserstrahlerzeugungseinrichtung 4, der Steuereinrichtung 6 und der Abbildungsoptik 12 aus der der Laserstrahl 5 austritt und auf die zu bearbeitende Oberfläche des Werkstücks 14 auftritt, das als Konturlinie 20 (IST-Form) dargestellt ist.

Strichliert ist die SOLL-Form 22 dargestellt. Die Konturmeßeinrichtung 18 ist hier in die Abbildungsoptik 12 integriert und der Arbeitsstrahl 5 wird gleichzeitig als Meßstrahl für die Konturmeßeinrichtung 18 verwendet. Durch die Steuereinrichtung 6 läßt sich mittels nicht näher dargestellter Stellantriebe der Abstand zwischen Abbildungsoptik 12 und der Werkstückoberfläche 20 variieren, was durch einen Doppelpfeil 24 angedeutet ist. Ebenfalls mit der Steuereinrichtung 6 und entsprechender Stellantriebe wird auch der Vorschub bezüglich des Werkstücks 14 bewirkt und gesteuert. Dies ist durch einen Pfeil 26 dargestellt. Wie aus Fig. 3 zu ersehen ist, wird der Übergang von der IST-Form 20 zur SOLL-Form 22 nicht notwendigerweise mit einem einmaligen Überstreichen des Laserstrahls 5 erreicht. In dem bereits überstrichenen Bereich 28 ist immer noch eine Abweichung zwischen SOLL- und IST zu sehen.

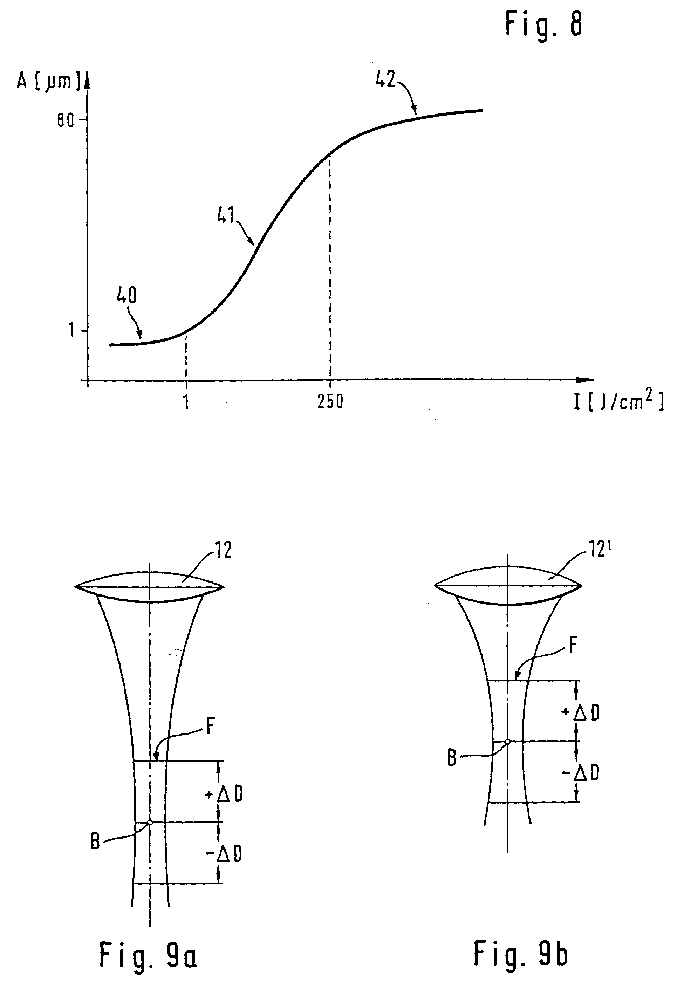

Um die Materialbearbeitung unempfindlicher gegenüber Vibrationen und zittern zu machen wird der Bearbeitungsstrahl mit einer Rayleighlänge von 300 µm und größer erzeugt. Details hierzu sind in Verbindung mit Fig. 9 erläutert.

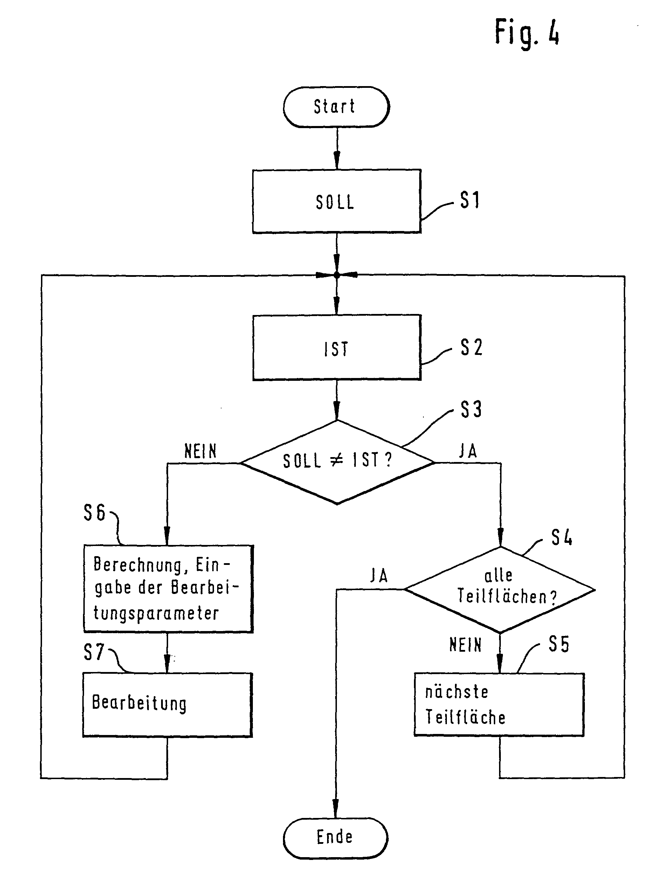

Fig. 4 zeigt eine Flußdiagramm zur Erläuterung wesentlicher Teilschritte des erfindungsgemäßen Verfahrens mit dem die Oberfläche eines Werkstücks 14 von der IST-Form in die SOLL-Form überführt wird. In einem Schritt S1 wird zunächst in einem Referenzkoordinatensystem die gewünschte SOLL-Form festgelegt. Die SOLL-Form kann beispielsweise in Form von CNC- oder CAD-Daten vorliegen. In einem Schritt S2 wird dann die IST-Form des noch unbearbeiteten oder vorbearbeiteten Werkstücks 14 ermittelt und in Koordinaten des Referenzkoordinatensystems dargestellt. In einem Schritt S3 wird abgefragt, ob der IST-Wert an der zu bearbeitenden Teilfläche des Werkstücks 14 bereits mit dem SOLL-Wert übereinstimmt oder nicht. Ist dies der Fall wird in einem Schritt S4 abgefragt, ob bereits alle Teilflächen bearbeitet sind oder nicht. Ist dies der Fall, ist die Bearbeitung beendet. Sind noch nicht alle Teilflächen bearbeitet, so erfolgt in einem Schritt S5 der Übergang zur nächsten Teilfläche und die Bearbeitung beginnt wieder bei Schritt S2.

Ergibt die Abfrage in Schritt S3 ein NEIN, so wird zu einem Schritt S6 verzweigt, in dem aufgrund des Vergleichs von SOLL- und IST-Daten, aufgrund externer Eingaben über das zu bearbeitende Material, etc. die Bearbeitungsparamer für den Laser 2 und die Strategie der Bearbeitung ermittelt wird. In einem Schritt S7 wird dann die Laserbearbeitung der jeweiligen Teilfläche entsprechend den in Schritt S6 ermittelten Parametern ausgeführt. Anschließend wird zurück zu dem Schritt S2 verzweigt.

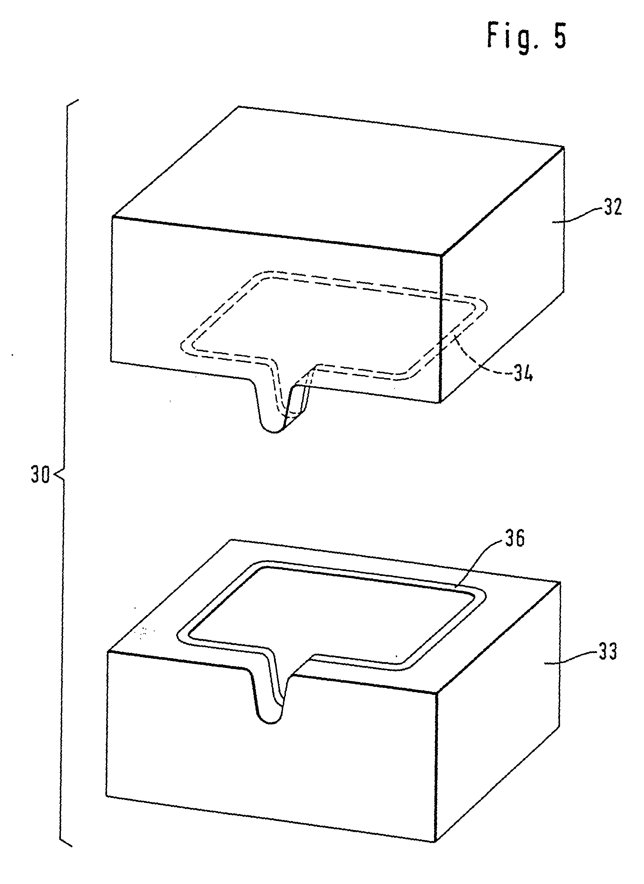

Fig. 5 zeigt schematisch ein Formwerkzeug 30, das aus zwei komplementären Teilen 32 und 33 besteht. Die beiden Teile 32 und 33 lassen sich zusammenfügen und der von ihnen dann umschlossene Hohlraum wird dann durch zwei komplementäre Teildichtflächen 34 und 36 abgedichtet. Die Teildichtflächen 34 und 36 können nahezu beliebig geformt sein.

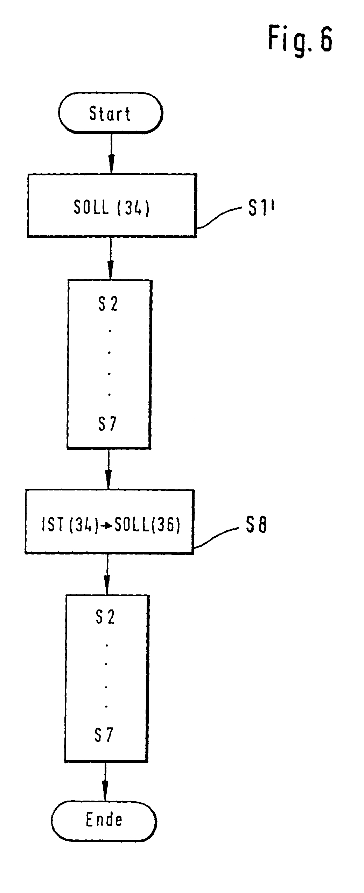

Fig. 6 zeigt ein Flußdiagramm zur Erläuterung der Herstellung der Dichtflächen 34 und 36 mit dem Verfahren gemäß der vorliegenden Erfindung. In einem Schritt S1' wird zunächst die SOLL-Form von nur einer der beiden Teildichtflächen, beispielsweise der Teildichtfläche 34, festgelegt. Anschließend erfolgt die Bearbeitung gemäß den Schritten S2 bis S7 nach Fig. 4. Ist die erste Teildichtfläche 34 vollständig bearbeitet, so wird in einem Schritt S8 die nach Bearbeitung vorliegende IST-Form der ersten Teildichtfläche 34 als SOLL-Form für die zweite Teildichtfläche 36 festegelegt. Die Bearbeitung der zweiten Teildichtfläche 36 erfolgt dann wiederum analog den Schritten S2 bis S7 gemäß Fig. 4.

Fig. 7 zeigt schematisch einen Schnitt durch einen Teil der Teile 32 und 33 des Formwerkzeugs 30 bzw. einen Schnitt durch einen Teil der Teildichtflächen 34 und 36, wobei Bereiche 38 und 39 vergrößert dargestellt sind. Die beiden Teile 32 und 33, genauer deren Teildichtflächen 34 und 36 sind mit einem Abstand D voneinander entfernt angeordnet. Aufgrund der Rauhigkeit der vorbearbeiteten Teildichtflächen 34 und 36 variiert der tatsächliche Abstand Dᵢ (IST-Abstand) zwischen einander gegenüberliegenden Flächenelementen der Teildichtflächen 34 und 36. Die beiden Formwerkzeugteile 32 und 33 werden in festem Abstand zueinander räumlich fixiert und der IST-Abstand Dᵢ zwischen einander gegebüberliegenden Flächenelementen der Teildichtflächen 34 und 36 wird gemessen. Anschließend wird der SOLL-Abstand Dₛ festgelegt und die beiden Teildichtflächen 34 und 36 werden mit dem Laser derart bearbeitet, daß innerhalb der Toleranzen Dᵢ = Dₛ ist. Ist diese Bedingung erfüllt, weisen die beiden Teildichtflächen die gewünschte SOLL-Form 34' und 36' auf.

In Fig. 8 ist der durch den Laserstrahl 5 verursachte Materialabtrag A in µm als Funktion der Laserfluenz (Leistungsdichte mal Bestrahlungszeit) in J/cm² aufgetragen. Es ergibt sich ein Kurvenverlauf in der Form eines langgezogenen S mit einem flachen Kurvenverlauf im Bereich geringer Laserfluenz, Bezugszeichen 40, und im Bereich hoher Laserfluenz, Bezugszeichen 42, und einem steilen Kurvenverlauf im Bereich mittlerer Laserfluenz, Bezugszeichen 41. Die in Fig. 8 angegebenen Werte gelten für einen Kupferdampflasersystem, wie er aus der DE-OS 44 12 443 bekannt ist und auf die hier vollinhaltlich bezug genommen wird. Für einen solchen Kupferdampflaser und Aluminium als zu bearbeitendem Material endet der Bereich 40 bzw. beginnt der Bereich 41 bei ca. 1 J/cm² und das Ende des Bereichs 41 bzw. der Beginn des Bereichs 42 liegt bei ca. 250 J/cm². Bis zu einer Laserfluenz von ungefähr 1 J/cm² liegt der Aluminiumabtrag im Bereich von 1 µm, Bereich 40, und im Bereich 42 mit einer Laserfluenz über 250 J/cm² liegt der Aluminiumabtrag bei ca. 80 µm.

Der Laser 2 wird erfindungsgemäß in den Bereichen 40 und 42 mit flachem Kurvenverlauf betrieben, da dort geringe Fluenzschwankungen, wie sie beispielsweise durch Variationen des Abstands zwischen Laserkopf 3 und zu bearbeitender Fläche aufgrund von Vibrationen auftreten, sich kaum auf die Größe des Materialabtrags auswirken. Folglich ist eine kontrollierte und genaue Formgebung einfacher. Der Bereich 40 mit niedriger Laserintensität ist insbesondere beim Laserpolieren vorteilhaft, da beim Laserpolieren ein großer Materialabtrag nicht gewünscht ist.

Eine weitere Maßnahme, um die Lasereinrichtung 2 unempfindlicher gegenüber Lage- bzw. Positionsschwankungen zu machen, wie sie bei Roboterarmen unweigerlich auftreten, wird anhand von Fig. 9a und 9b erläutert. Hierzu wird in der Lasereinrichtung 2 eine Fokussiervorrichtung bzw. eine Abbildungsoptik 12 verwendet, die eine große Rayleighlänge, vorzugsweise ≥ 300 µm aufweisen. Bekanntlich ist bei realen optischen Systemen der Brennpunkt B kein idealer mathematischer Punkt, sondern ein Raumbereich. Die Rayleighlänge ist ein Maß für die Variation des Querschnitts des Strahlenbündels im Bereich des geometrischen Brennpunkts. Je kleiner die Rayleighlänge ist, desto mehr stimmt das reale Strahlenbündel mit dem geometrischen Strahlengang überein.

Fig. 9a zeigt eine Optik 12 mit großer Rayleighlänge und Fig. 9b eine Optik 12' mit kleiner Rayleighlänge. Variiert in beiden Fällen der Abstand zwischen Abbildungsoptik 12, 12' und zu bearbeitender Fläche um den Brennpunkt B um ΔD, so schwankt bei kleiner Rayleighlänge - Fig. 9b - die Querschnittsfläche F des Strahlenbündels im Bereich zwischen +ΔD und -ΔD und damit die Laserintensität erheblich mehr als bei großer Rayleighlänge - Fig. 9a. Eine Lasereinrichtung 2 mit einer Abbildungsoptik 12 mit großer Rayleighlänge ist daher unempfindlicher gegenüber Vibrationsschwankungen.

## Patentansprüche

1. Verfahren zur Herstellung von Dichtflächen an komplementären Formwerkzeugen mit wenigstens zwei komplementären Teildichtflächen, mit folgenden Verfahrens schritten:
a) Festlegen der dreidimensionalen Koordinaten einer der komplementären Teildichtflächen (Soll-Daten);
b) Abtasten wenigstens der einen komplementären Teildichtfläche mittels einer 3D-Konturmeßeinrichtung zum Bestimmen der genauen, tatsächlichen Oberflächenform dieser Teildichtflächen in einem Referenzkoordinatensystem (IST-Daten);
c) Errechnen von Bearbeitungsparamentern für eine Strahlbearbeitungseinrichtung zum Abtragen von Materialschichten aufgrund der ermittelten SOLL-Daten und aufgrund der durch die 3D-Konturmeßeinrichtung ermittelten IST-Daten;
d) Bearbeiten der einen komplementären Teildichtfläche mit der Strahlbearbeitungseinrichtung auf der Basis der in Schritt c) ermittelten Bearbeitungsparameter;
e) erneutes Abtasten der in Schritt d) bearbeiteten Teildichtfläche mittels der 3D-Konturmeßeinrichtung zum Bestimmen der nunmehr nach der Bearbeitung vorliegenden Oberflächenform der Teildichtflächen (aktualisierte IST-Daten);
f) gegebenenfalls Wiederholung der Schritte b) bis e) bis die Abweichung der SOLL-Daten von den IST-Daten innerhalb eines bestimmten Toleranzbereiches liegt; und
g) Festlegen der zuletzt in Schritt e) ermittelten Oberflächenform der einen bereits bearbeiteten komplementären Teildichtfläche als SOLL-Form für die andere komplementäre Teildichtfläche; und
h) Bearbeiten der anderen komplementären Teildichtfläche gemäß den Schritten c) bis f).

2. Verfahren zur Herstellung von Dichtflächen an komplementären Formwerkzeugen mit wenigstens zwei komplementären Teildichtflächen, mit folgenden Verfahrensschritten:
a) Anordnen der komplementären Formwerkzeuge derart, daß der Abstand einander entsprechender Flächenabschnitte der Teildichtflächen innerhalb eines ersten Toleranzbereichs liegt;
b) Bestimmen des genauen Abstands einander entsprechender Flächenabschnitte der Teildichtflächen mittels einer 3D-Konturmeßeinrichtung (IST-Daten);
c) Festlegen eines SOLL-Abstandes (SOLL-Daten), der mindestens so groß wie der größte IST-Abstand ist;
d) Errechnen von Bearbeitungsparamentern für eine Strahlbearbeitungseinrichtung zum Abtragen von Materialschichten aufgrund der ermittelten SOLL-Daten und aufgrund der durch die 3D-Konturmeßeinrichtung ermittelten IST-Daten;
e) Bearbeiten wenigstens einer der komplementären Teildichtflächen mit der Strahlbearbeitungseinrichtung auf der Basis der in Schritt d) ermittelten Bearbeitungsparameter;
f) erneutes Bestimmen des genauen Abstandes einander entsprechender Flächenabschnitte der Teildichtflächen mittels der 3D-Konturmeßeinrichtung (aktualisierte IST-Daten);
g) gegebenenfalls Wiederholung der Schritte d) bis f) bis die Abweichung der SOLL-Daten von den IST-Daten innerhalb eines zweiten Toleranzbereiches liegt, der kleiner als der erste Toleranzbereich ist.

3. Verfahren nach wenigstens einem der vorhergehenden Ansprüche 1 oder 2, **dadurch gekennzeichnet, daß** die Querschnittsfläche des auf der zu bearbeitenden Teildichtfläche auftreffenden Arbeitsstrahls die Teildichtfläche in ihrer gesamten Breite überdeckt.

4. Verfahren nach einem der vorhergehenden Ansprüche, **dadurch gekennzeichnet, daß** die Festlegung der SOLL-Daten und die erstmalige Ermittlung der IST-Daten vertauscht sind.

5. Verfahren nach wenigstens einem der vorhergehenden Ansprüche, **dadurch gekennzeichnet, daß** die Strahlbearbeitungseinrichtung in einem Bereich betrieben wird, in dem die Änderungen des Materialabtrags aufgrund von Schwankungen der Strahlintensität möglichst gering sind.

6. Verfahren nach Anspruch 5, **dadurch gekennzeichnet, daß** die Strahlbearbeitungseinrichtung beim Laserpolieren in einem Bereich mit geringer Laserintensität betrieben wird.

7. Verfahren nach wenigstens einem der vorhergehenden Ansprüche, **dadurch gekennzeichnet, daß** die 3D-Konturmeßeinrichtung mit Triangulation arbeitet.

8. Verfahren nach wenigstens einem der vorhergehenden Ansprüche, **dadurch gekennzeichnet, daß** die Strahlbearbeitungseinrichtung einen Laserstrahl als Arbeitsstrahl erzeugt.

9. Verfahren nach Anspruch 8, **dadurch gekennzeichnet, daß** die Strahlbearbeitungseinrichtung einen gepulsten Laserstrahl erzeugt.

10. Verfahren nach Anspruch 8 oder 9, **dadurch gekennzeichnet, daß** der Arbeitsstrahl der Strahlbearbeitungseinrichtung als Meßstrahl der 3D-Konturmeßeinrichtung verwendet wird.

11. Verfahren nach wenigstens einem der vorhergehenden Ansprüche, **dadurch gekennzeichnet, daß** Arbeitsstrahl senkrecht zu der zu bearbeitenden Oberfläche ausgerichtet wird.

## Claims

1. A method of producing sealing surfaces on complementary shaping tools having at least two complementary component sealing surfaces, in the following steps:
(a) defining the three-dimensional co-ordinates of one of the complementary component sealing surfaces (set data);
(b) scanning at least the one complementary component sealing surface with a 3D contour measuring device for determining the precise actual surface shape of the component sealing surfaces in reference co-ordinate system (actual data);
(c) calculating parameters for a beam machining device for removing layers of material on the basis of the determined set data and on the basis of the actual data obtained by the 3D contour measuring device;
(d) machining one complementary component sealing surface with the beam machining device on the basis of the parameters determined in step (c);
(e) re-scanning of the component sealing surface machined in step (d) using the 3D contour measuring device to determine the shape of the component sealing surfaces after machining (updated actual data);
(f) repeating steps (b) to (e) if necessary until the deviation between the set data and the actual data is within a defined tolerance range;
(g) defining the shape of the one already machined complementary component sealing surface determined in step (e) as the set shape for the other complementary component sealing surface, and
(h) machining the other complementary component sealing surface in accordance with steps (c) to (f).

2. A method of producing sealing surfaces on complementary shaping tools having at least two complementary component sealing surfaces, in the following steps:
(a) disposing the complementary shaping tools so that the distance between corresponding portions of the component sealing surfaces is within a first tolerance range;
(b) determining the exact distance between corresponding portions of the component sealing surfaces, using a 3D contour measuring device (actual data);
(c) defining a set distance (set data) at least as great as the maximum actual distance;
(d) calculating machining parameters for a beam machining device for removing layers of material on the basis of the determined set data and on the basis of the actual data obtained by the 3D contour measuring device;
(e) machining at least one of the complementary component sealing surfaces with the beam machining device on the basis of the parameters obtained in step (d) ;
(f) re-determining the exact distance between corresponding portions of the component sealing surfaces, using the 3D contour measuring device (updated actual data), and
(g) repeating steps (d) to (f) if required until the deviation between the set data and the actual data is within a second tolerance range less than the first tolerance range.

3. A method according to at least one of the preceding claims 1 or 2, **characterised in that** the cross-sectional area of the working beam striking the component sealing surface for processing covers the entire width of the component sealing surface.

4. A method according to any of the preceding claims, **characterised in that** determination of the set data and first calculation of the actual data are interchanged.

5. A method according to at least one of the preceding claims, **characterised in that** the beam machining device is operated in a range in which changes in removal of material due to fluctuations in the beam intensity are at a minimum.

6. A method according to claim 5, **characterised in that** the beam machining device is operated over a range at lower laser intensity when laser polishing.

7. A method according to at least one of the preceding claims, **characterised in that** the 3D contour measuring device operates by triangulation.

8. A method according to at least one of the preceding claims, **characterised in that** the beam machining device generates a working beam in the form of a laser beam.

9. A method according to claim 8, **characterised in that** the beam machining device generates a pulsed laser beam.

10. A method according to claim 8 or 9, **characterised in that** the working beam from the beam machining device is used as a measuring beam in the 3D contour measuring device.

11. A method according to at least one of the preceding claims, **characterised in that** the working beam is aligned at right angles to the surface for machining.

## Revendications

1. Procédé pour réaliser des surfaces d'étanchéité sur des outils de formage complémentaires comportant au moins deux éléments de surface d'étanchéité complémentaires, comprenant les étapes opératoires suivantes consistant à :
a) déterminer les coordonnées tridimensionnelles de l'un des éléments de surface d'étanchéité complémentaires (données de CONSIGNE);
b) explorer au moins un élément de surface d'étanchéité complémentaire à l'aide d'un dispositif de mesure de contour tridimensionnel pour déterminer la forme effective précise de la surface de ces éléments de surface d'étanchéité dans un système de coordonnées-de référence (données RÉELLES);
c) calculer des paramètres d'usinage pour un dispositif d'usinage utilisant un faisceau pour enlever des couches de matière sur la base des données de CONSIGNE déterminées et sur la base des données RÉELLES déterminées par le dispositif de mesure de contour tridimensionnel;
d) usiner un élément de surface d'étanchéité complémentaire avec le dispositif d'usinage utilisant un faisceau, sur la base des paramètres d'usinage déterminés lors de l'étape c);
e) explorer à nouveau l'élément d'étanchéité usiné lors de l'étape d), à l'aide du dispositif de mesure de contour tridimensionnel pour déterminer la forme de surface, qui est maintenant présente après l'usinage, des éléments de surface d'étanchéité (données RÉELLES actualisées);
f) répéter éventuellement les étapes b) à e) jusqu'à ce que l'écart entre les valeurs de CONSIGNE et les valeurs RÉELLES se situe dans une plage déterminée de tolérance; et
g) déterminer la forme de surface déterminée en dernier lieu lors de l'étape e) d'un élément de surface d'étanchéité complémentaire déjà usiné, en tant que forme de CONSIGNE pour l'autre élément de surface d'étanchéité complémentaire; et
h) usiner l'autre élément de surface d'étanchéité complémentaire conformément aux étapes c) à f).

2. Procédé pour réaliser des surfaces d'étanchéité sur des outils de formage complémentaires comportant au moins deux éléments de surface d'étanchéité complémentaires, comprenant les étapes opératoires suivantes consistant à :
a) disposer les outils de formage complémentaires de telle sorte que la distance entre des parties, qui se correspondent, des éléments de surface d'étanchéité se situent à l'intérieur d'une première plage de tolérance;
b) déterminer la distance précise de parties, qui se correspondent, des éléments de surface d'étanchéité à l'aide d'un dispositif de mesure de contour tridimensionnel (données RÉELLES);
c) déterminer une distance de CONSIGNE (données de CONSIGNE) qui est au moins égale à la distance RÉELLE la plus grande;
d) calculer des paramètres d'usinage pour un dispositif d'usinage utilisant un faisceau pour enlever des couches de matière sur la base des données de CONSIGNE déterminées et sur la base des données RÉELLES déterminées par le dispositif de mesure de contour tridimensionnel;
e) usiner au moins l'un des éléments de surface-d'étanchéité complémentaires avec le dispositif d'usinage utilisant un faisceau, sur la base du paramètre d'usinage déterminé lors de l'étape d) ;
f) déterminer à nouveau la distance précise de parties, qui se correspondent, des éléments de surface d'étanchéité à l'aide du dispositif de contour tridimensionnel (données RÉELLES actualisées);
g) répéter éventuellement les étapes d) à f) jusqu'à ce que l'écart entre les données de CONSIGNE et les données RÉELLES se situe dans une seconde plage de tolérance, qui est inférieure à la première plage de tolérance.

3. Procédé selon au moins l'une des revendications précédentes 1 ou 2, **caractérisé en ce que** la surface en coupe transversale du faisceau de travail, qui rencontre l'élément de surface d'étanchéité à usiner, recouvre l'élément de surface d'étanchéité sur toute sa largeur.

4. Procédé selon au moins l'une des revendications précédentes, **caractérisé en ce que** la détermination des données de CONSIGNE et la détermination, effectuée pour la première fois, des données RÉELLES sont permutées.

5. Procédé selon au moins l'une des revendications précédentes, **caractérisé en ce que** le dispositif d'usinage utilisant un faisceau fonctionne dans une zone, dans laquelle les variations de l'enlèvement de matière en raison de variations de l'intensité du faisceau sont aussi faibles que possible.

6. Procédé selon la revendication 5, **caractérisé en ce que** le dispositif d'usinage utilisant un faisceau fonctionne, dans le cas du polissage au laser, dans une zone avec une faible intensité laser.

7. Procédé selon au moins l'une des revendications précédentes, **caractérisé en ce que** le dispositif de mesure de contour tridimensionnel travaille selon un mode par triangulation.

8. Procédé selon au moins l'une des revendications précédentes, **caractérisé en ce que** le dispositif d'usinage utilisant un faisceau produit un faisceau laser en tant que faisceau de travail.

9. Procédé selon la revendication 8, **caractérisé en ce que** le dispositif d'usinage utilisant un faisceau produit un faisceau laser pulsé.

10. Procédé selon les revendications 8 ou 9, **caractérisé en ce que** le faisceau de travail du dispositif d'usinage utilisant un faisceau est utilisé en tant que faisceau de mesure du dispositif de mesure de contour tridimensionnel.

11. Procédé selon au moins l'une des revendications précédentes, **caractérisé en ce que** le faisceau de travail est orienté perpendiculairement à la surface à usiner.
